Europäisches Patentamt

European Patent Office

Office européen des brevets

(19)

(11) Veröffentlichungsnummer : **0 156 276**
B1

(12) **EUROPÄISCHE PATENTSCHRIFT**

(45) Veröffentlichungstag der Patentschrift :
14.02.90

(21) Anmeldenummer : 85103086.6

(22) Anmeldetag : 16.03.85

(51) Int. Cl.⁵ : **A 01 K 13/00, A 61 D 11/00**

(54) **Dipgerät zur Euterpflege.**

(30) Priorität : 24.03.84 DE 3410968

(43) Veröffentlichungstag der Anmeldung :
02.10.85 Patentblatt 85/40

(45) Bekanntmachung des Hinweises auf die Patenterteilung : 14.02.90 Patentblatt 90/07

(84) Benannte Vertragsstaaten :
AT BE CH DE FR GB IT LI LU NL SE

(56) Entgegenhaltungen :
EP--A-- 0 029 240
US--A-- 2 532 088
US--A-- 3 366 111
US--A-- 3 828 776
US--A-- 3 874 561
US--A-- 3 921 860

(73) Patentinhaber : Henkel Kommanditgesellschaft auf
Aktien
Postfach 1100 Henkelstrasse 67
D-4000 Düsseldorf-Holthausen (DE)

(72) Erfinder : Mönch, Eberhard
Schlossberger Weg 19
D-4019 Monheim (DE)
Erfinder : Puchelt, Manfred
Bismarckstrasse 106
D-4017 Dormagen (DE)
Erfinder : Scholz, Siegfried, Dr.
Am Krahnap 54
D-4000 Düsseldorf-Eller (DE)

## Beschreibung

Die Erfindung betrifft ein Dipgerät zur Euterpflege, bei der eine Zitze in ein flüssiges Pflegemittel getaucht wird, mit einem aus einem Vorratsbehälter (1) mit flüssigem Pflegemittel (15) zu versorgenden Becher (3), wobei der Vorratsbehälter (1) seitlich an den Becher (3) angeformt ist und einen Produktdurchgang (8) zum Becher besitzt.

Ein solches Dipgerät dient dazu, die Zitzen eines Kuheuters nach dem Absetzen der Melkmaschine zu desinfizieren und/oder mit einem flüssigen Pflegemittel zu versehen. Zu diesem Zweck werden Becher verwendet, die das aus einem Vorratsbehälter nachzufüllende Pflegemittel enthalten und zum Eintauchen einer Zitze ausgebildet sind. Es ist dabei darauf zu achten, daß die Zitzen möglichst vollkommen in das Pflegemittel eingetaucht werden, dieses aber nicht über den Becherrand überfließt. Probleme bereitet das Abstellen des noch teilweise gefüllten Bechers nach dem Behandeln eines Euters. Es muß im allgemeinen Sorge getragen werden, daß das noch im Becher verbleibende Pflegemittel nicht unnötig auf den Stallboden fließt.

Ein Dipgerät der eingangs genannten Art ist aus der US-A-3 828 776 bekannt. Ein solches, bekanntes Dipgerät weist einen länglichen, nach oben geöffneten Becher zum Aufnehmen der zu desinfizierenden Zitze auf. In einem mittleren Bereich der Seitenwand des Bechers ist eine Einlaß- und Auslaß-Öffnung für das Pflegemittel vorgesehen. Ein hohler horizontal sich erstreckender Vorratsbehälter für das Pflegemittel ist im rechten Winkel an der die Öffnung aufweisenden Seitenwand des Bechers angebracht. Der Vorratsbehälter hat ein abgeschlossenes äußeres und ein offenes inneres Ende, das über die Öffnung in der Seitenwand des Bechers mit diesem Becher in Verbindung steht. Bei der Anwendung eines solchen Dipgerätes wird dieses leicht gekippt, so daß das Pflegemittel aus dem Vorratsbehälter in den Becher läuft. Dies ist deswegen wichtig, weil die Zitzen möglichst vollkommen in das Pflegemittel eingetaucht werden sollen. Bei diesem Kippen besteht jedoch die Gefahr, daß das Dipgerät zu stark gekippt wird, so daß das Pflegemittel aus dem Becher herausläuft und auf den Stallboden fließt.

Der Erfindung liegt die Aufgabe zugrunde, ein Dipgerät zur Euterpflege der eingangs genannten Art zu schaffen, das ohne die Gefahr des Überlaufens bei Anwendung unmittelbar an einen Vorratsbehälter anzukoppeln und einfach durch Kippen zu betätigen ist. Insbesondere soll das Dipmittel allein durch Schwenken des Bechers in dessen aufrechte Stellung aus dem Vorratsbehälter in den Becher und zurück in den Vorratsbehälter zu fördern sein, ohne daß trotz höheren Flüssigkeitsniveaus im Vorratsbehälter die Gefahr des Überlaufens des Bechers besteht. Die Gesamthöhe des neuen Gerätes soll schließlich so klein sein, daß die Anwendung auch bei relativ geringem Abstand zwischen Zitzen und Boden Probleme nicht bereitet.

Diese Aufgaben werden erfindungsgemäß bei einem Dipgerät der eingangs genannten Art dadurch gelöst, daß der Becher über einen seitlich an ihn angeformten Rohrstutzen mit dem Produktauslaß des Vorratsbehälters und dieser mit dem Rohrstutzen über eine luftdichte Kupplung verbunden ist,

daß die Längsachsen von Rohrstutzen und Becher im wesentlichen senkrecht aufeinander stehen,

daß ein Trichter luftdicht in die Becheröffnung eingesetzt ist und mindestens eine seitliche Entlüftungsöffnung in etwa der Mitte der Trichtertiefe und mindestens eine Öffnung im bzw. am Trichterboden aufweist,

daß der Trichter in seiner Form, insbesondere seiner Öffnung, so ausgebildet ist, daß er über jede Zitze gestülpt werden kann, daß der in Arbeitstellung oberste Bereich des Querschnitts des Produktdurchgangs so hoch wie oder höher als die Entlüftungsöffnungen des Trichters liegt.

Der erfindungsgemäße Becher mit angeformtem Stutzen kann auch als abgewinkeltes, rohrähnliches, beidseitig offenes Verbindungsstück beschrieben werden, dessen eines Ende mit der Öffnung des Vorratsbehälters luftdicht zu kuppeln ist und dessen anderes Ende als Becher insbesondere mit trichterförmigem Einsatz ausgebildet ist.

Gegebenenfalls wird der Trichter — wie bei einem solchen Bauelement üblich — mit Öffnungen am Kopf- und Bodenbereich ausgestattet. Zumindest am Umfang seines Kopfbereichs soll der Trichter luftdicht schließend in den Rand des Kopfbereichs des Bechers eingepaßt werden.

Um das Einführen der Zitzen zu erleichtern und die Gefahr des Überschwappens zu verringern, wird das Dipgerät in einer vorteilhaften Aufgestaltung der Erfindung mit einem in die Öffnung des einzusetzenden Schwapprand ausgerüstet, der etwa die Form eines umgekehrten Trogs besitzen und aus einem höheren Deckel mit einer nach innen tiefer liegenden Öffnung bestehen kann sowie in den Trichter bzw. Becher dicht einzupassen ist. Vorzugsweise wird die nach innen tiefer liegende Öffnung des Schwapprandes kleiner als die obere Öffnung der Trichters ausgebildet, so daß der dadurch entstehende Raum als Restmengensammelkammer zu benutzen ist. Dieser Schwapprand bzw. Abstreifer wird vorzugsweise lösbar in den Trichter eingepaßt um das Reinigen zu erleichtern.

Anhand der schematischen Darstellung in der Zeichnung werden Einzelheiten der Erfindung erläutert. Es zeigen:

Fig. 1 das Gerät von oben.

Fig. 2 den Querschnitt längs der Linie A-A von Fig. 1 eines in Arbeitsstellung befindlichen Dipgerätes; und

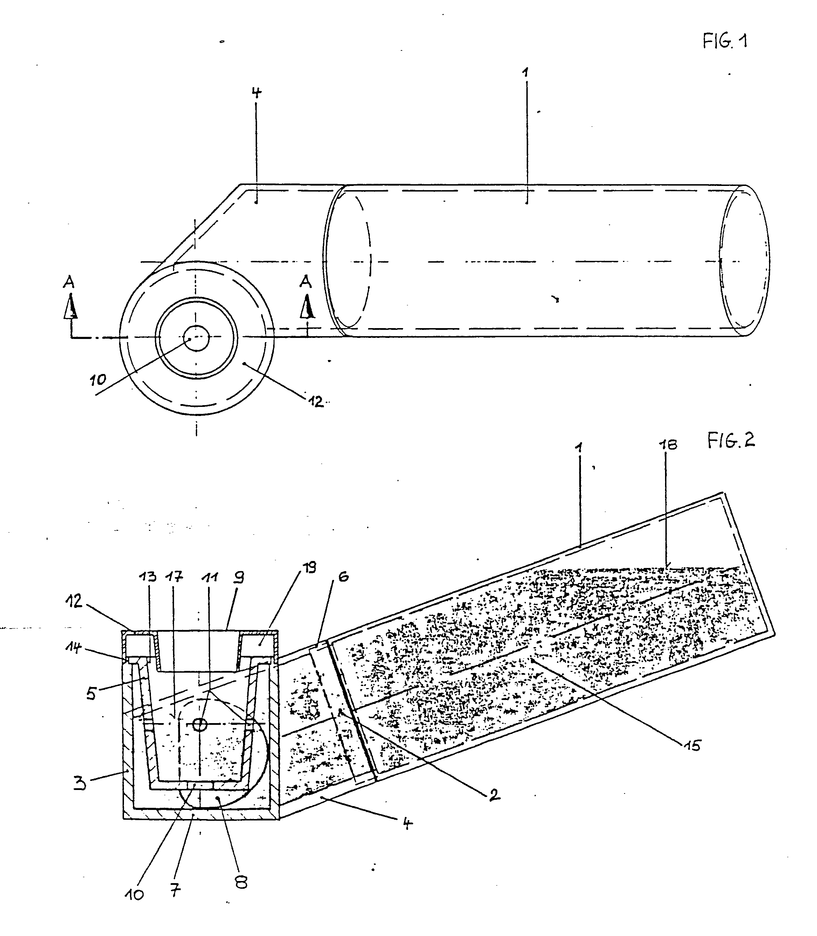

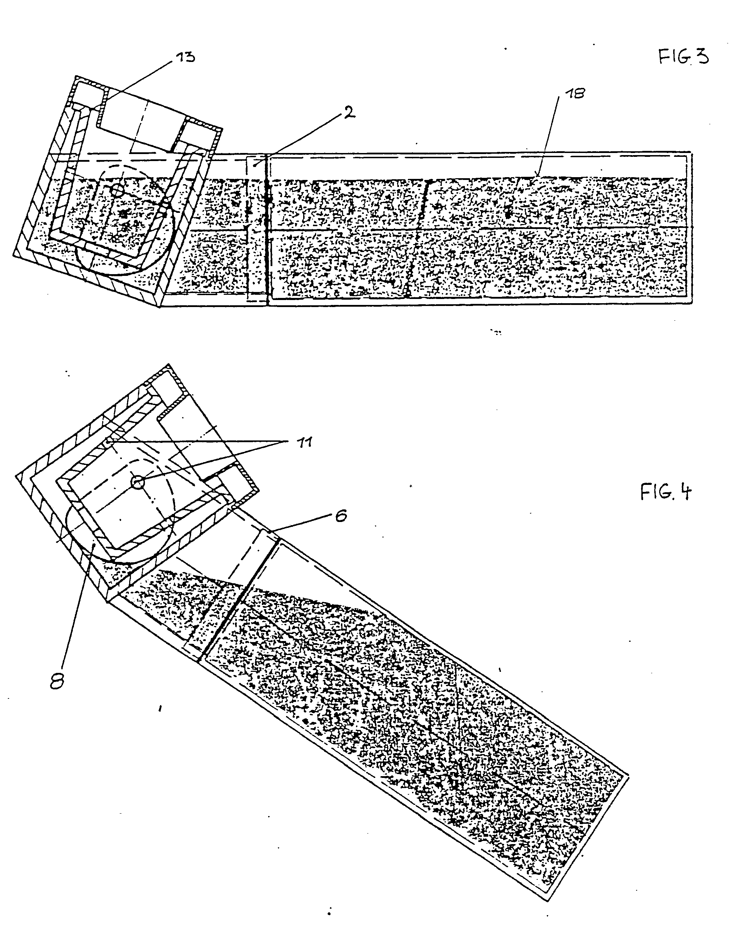

Fig. 2 bis 5 den Kippablauf von der Arbeitstellung zur Ruhestellung des Gerätes.

Das Dipgerät nach Fig. 1 bis 5 besteht aus einer Flasche bzw. einem Vorratsbehälter 1 mit Produktdurchlaß 2, vorzugsweise mit Weithalsöffnung, und einem Becher 3 mit seitlich angeformten Rohrstutzen 4. In den nach oben geöffneten Becher 3 kann ein Trichter 5 eingesetzt werden.

Der Stutzen 4 weist eine zum luftdichten Ankuppeln an den Produktauslaß 2 des Vorratsbehälters 1 geeignete Kupplung 6 auf. Der Becher 3 besitzt einen Produktdurchgang 5 über die ganze Höhe des Stutzens 4 zum Inneren des Bechers 3. Der Trichter 5 besitzt eine Bodenöffnung 10 und mindestens eine Entlüftungsöffnung 11 etwa im Bereich der Mitte des Trichters. Der obere Trichterrand liegt luftdicht am oberen angrenzenden Rand der Becheröffnung an.

Der Trichter 5 wird vorzugsweise mit einem Schwapprand 12 ausgestattet. Dieser besitzt etwa die Form eines auf den Kopf gestellten, runden bzw. kreisförmigen Trogs mit Bodenfläche und zwei umlaufenden Randstegen. Der Schwapprand 12 wird vorzugsweise so oben auf den oberen Rand von Becher- bzw. Trichteröffnung 13 gesetzt, daß seine der Trogbodenfläche entsprechende Deckfläche den bei Anwendung der jeweiligen Zitze zuzuwendenden Geräterand bildet. Der Trog-Analogie entsprechend besitzt der Schwapprand einen äußeren Steg, der als Klemmrand 14 mit dem oberen Becher- bzw. Trichterrand zu kuppeln ist, und einen inneren Steg, der als Einführöffnung 9 in die tiefer liegende, größere Trichteröffnung 13 hineinragen soll. Die Steghöhe des inneren Stegs soll daher größer als diejenige des äußeren Stegs sein. Zwischen der Trichterfläche und dem inneren Steg verbleibt vorzugsweise ein Ringspalt als Zugang zu dem zwischen den Stegen und der Deckfläche aufgespannten Trograum auf der Innenseite des Schwapprandes. Dieser Trograum kann beim Schwenken des Schwapprandes in eine Tieflage als Restmengenkammer 19 ausgenutzt werden.

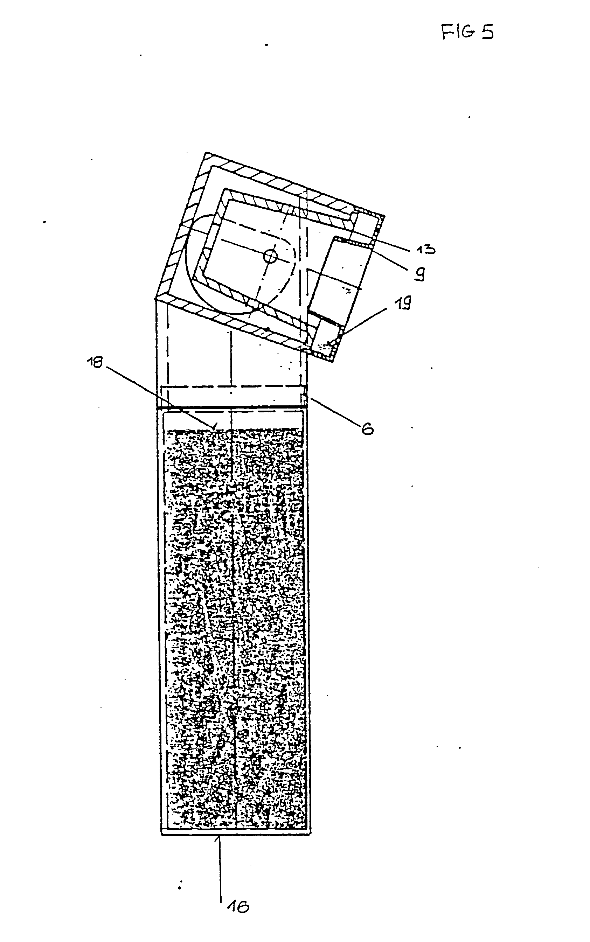

In den Fig. 2 bis 5 werden aufeinanderfolgende Stadien des Kippablaufs von der Arbeitsstellung (Fig. 2) zur Ruhestellung (Fig. 5) bzw. in umgekehrter Richtung von der Ruhestellung zur Arbeitsstellung dargestellt. In der Ruhestellung nach Fig. 5 befindet sich das Behandlungs- bzw. Pflegemittel 15 im Vorratsbehälter. Das Gerät wird in dieser Stellung in der Regel auf der Grundfläche 16 des Vorratsbehälters 1 abgestellt. Der Becher 3 wird vorzugsweise so mit dem Vorratsbehälter 1 gekuppelt, daß sich das Becher- bzw. Trichterinnere in der Ruhestellung vollständig entleeren, d. h. die obere Becheröffnung nach unten in eine Auskippstellung gerichtet wird.

Durch Schwenken über die Stellungen nach Fig. 4 und Fig. 3 bis zur Stellung nach Fig. 2 wird erreicht, daß das im Vorratsbehälter 1 befindliche flüssige Pflegemittel 15 durch den Stutzen 4 über den Produktdurchgang 8 in den Becher 3 und gegebenenfalls durch die Bodenöffnung 10 in den Trichter 6 fließt.

Das Ausfließen des Vorratsbehälters 1 setzt voraus, daß zugleich Luft durch den oberen Bereich des Produktdurchgang 8 von Becher 3 und Trichter 6 in den Stutzen 4 bzw. Vorratsbehälter 1 nachfließt. Die Belüftung des Vorratsbehälters 1 kann nur im vorliegenden Fall über die Entlüftungsöffnung 11 im Trichter 5 und über Produktdurchgang 8 erfolgen. Wenn der Flüssigkeitsspiegel 17 im Becher 3 bzw. Trichter 5 in der Arbeitsstellung nach Fig. 2 die Höhe der Entlüftungsöffnung 11 überschritten hat, kann keine Luft mehr in den Vorratsbehälter 1 gelangen und demgemäß keine weitere Flüssigkeit aus dem Vorratsbehälter über den Produktdurchgang 8 in den Becher fliessen. Obwohl also bei in der Ruhestellung nach Fig. 5 gefülltem Vorratsbehälter 1 nach Fig. 2 das Niveau 18 im gekippten Vorratsbehälter 1 nach Fig. 2 deutlich oberhalb des Flüssigkeitsspiegels 17 im Trichter 5 liegt, kann keine weitere Flüssigkeit aus dem Vorratsbehälter ausfließen. Der Flüssigkeitsspiegel 17 im Becher 3 bzw. Trichter 5 bleibt vielmehr konstant auf einer durch die Entlüftungsöffnung 11 vorgegebenen Höhe, und ein Überfließen des aufrechtstehenden Bechers ist nicht zu befürchten.

Durch konstruktives Verlagern der Entlüftungsöffnung 11 kann die Höhe des Flüssigkeitsspiegels 17 bzw. die zur Verfügung stehende Eintauchtiefe innerhalb des Trichters 5 vorgegeben werden. Der Trichter selbst kann die gezeichnete leicht konische Form besitzen. Ebenso ist auch eine zylindrische Form mit zylinderringförmigem Zwischenraum zwischen Trichter- und Becherwänden möglich.

Wenn dafür gesorgt wird, daß der Produktdurchgang 8 des Stutzens 4 mit der Entlüftungsöffnung 11 des Trichters 5 zur Deckung kommt, kann der Trichter 5 auch an der Innenseite des Bechers 3 anliegen. Selbstverständlich muß dann ein für das flüssige Pflegemittel 15 offener Durchflußweg zwischen dem Produktdurchgang 8 des Stutzens 4 und einem zugehörigen Einlaß im Bodenbereich — auch seitlich — des Trichters 5 gegeben sein.

Wird in der Arbeitsstellung nach Fig. 2 flüssiges Pflegemittel 15 verbraucht, so sinkt der Flüssigkeitsspiegel 17 im Trichter 5 und die Luftzufuhr über die Entlüftungsöffnung 11 wird wieder freigegeben. Es kann deshalb wieder Flüssigkeit bis zur vorgegebenen Höhe des Flüssigkeitsspiegels 17 nachfließen. Dieses System funktioniert so lange bis die Vorratsmenge im Vorratsbehälter 1 bzw. Stutzen 4 noch ausreicht, den Becher 3 bzw. Trichter 5 zu füllen.

Wenn das Dipgerät durch Kippen von der Lage Fig. 2 in diegenige der Fig. 5 wieder in die Ruhestellung gebracht werden soll, wird der Trichter 5 von der horizontalen in eine schräge oder vertikale Ebene geschwenkt und die im Trichter 5 bzw. Becher 3 enthaltene Flüssigkeit tritt — vornehmlich über die Trichterbodenöffnung 10 und Produktdurchgang 8 — zurück in den Vorratsbehälter 1. Auch bei diesem Vorgang sind die Entlüftungsöffnungen 11 im Bereich des Trichters 5 und Bechers 3 Voraussetzung für den Flüssigkeitstransport. Beim Zurückkippen des Gerätes nach Fig. 3 werden die Entlüftungsöffnungen 11 freigegeben, so daß die Vorratsbehälter 1 enthaltende eingeschlossene Luft wieder entweichen kann.

Der Schwapprand 12 hat u.a. die Aufgabe, die Restflüssigkeit, welche sich besonders bei dickflüssigen Medien an der Trichterwand absetzt und nur langsam zurückfliessen kann und somit nicht mehr in den Vorratsbehälter gelangen kann, zu sammeln. Diese Restflüssigkeit fließt nach Fig. 5 in den entstehenden Raum zwischen oberem Trichterkopf und aufgesetztem Schwapprand in die Restmengenkammer 19. Diese Flüssigkeit steht, wenn das Dipgerät wieder in Arbeitsstellung gebracht wird, im Trichter wieder zur Verfügung. Damit wird auch ein Verschmutzen der Umgebung vermieden.

Bezugszeichenliste

1 Vorratsbehälter
2 Produktdurchlaß
3 Becher
4 Stutzen
5 Trichter
6 Kupplung
7 Becherboden
8 Produktdurchgang
9 Einführöffnung (12)
10 Trichterbodenöffnung (5)
11 Entlüftungsöffnung (5)
12 Schwapprand
13 Trichteröffnung (5)
14 Klemmrand
15 Pflegemittel
16 Grundfläche
17 Flüssigkeitsspiegel
18 Niveau
19 Restmengenkammer

**Patentansprüche**

1. Dipgerät zur Euterpflege, bei der eine Zitze in ein flüssiges Pflegemittel getaucht wird, mit einem aus einem Vorratsbehälter (1) mit flüssigem Pflegemittel (15) zu versorgenden Becher (3), wobei der Vorratsbehälter (1) seitlich an den Becher (3) angeformt ist und einen Produktdurchgang (8) zum Becher besitzt, dadurch gekennzeichnet, daß der Becher (3) über einen seitlich an ihn angeformten Rohrstutzen (4) mit dem Produktauslaß des Vorratsbehälters (1) und dieser mit dem Rohrstutzen (4) über eine luftdichte Kupplung (6) verbunden ist, daß die Längsachsen von Rohrstutzen (4) und Becher (3) im wesentlichen senkrecht aufeinander stehen, daß ein Trichter (5) luftdicht in die Becheröffnung eingesetzt ist und mindestens eine seitliche Entlüftungsöffnung (11) in etwa der Mitte der Trichtertiefe und mindestens eine Öffnung (10) im bzw. am Trichterboden aufweist, daß der Trichter (5) in seiner Form, insbesondere seiner Öffnung, so ausgebildet ist, daß er über jede Zitze gestülpt werden kann, daß der in Arbeitsstellung oberste Bereich des Querschnitts des Produktdurchgangs (8) so hoch wie oder höher als die Entlüftungsöffnungen (11) des Trichters (5) liegt.

2. Dipgerät nach Anspruch 1, dadurch gekennzeichnet, daß der Produktdurchgang (8) zwischen Rohrstutzen (4) und Becher (3) im wesentlichen den ganzen Querschnitt des Rohrstutzens umfaßt.

3. Dipgerät nach Anspruch 1 oder 2, gekennzeichnet durch einen in die Öffnung (13) des Trichters (5) einzusetzenden Schwapprand (12) mit der Form eines auf den Kopf gestellten Trogs, dessen radial äußerer umlaufender Randsteg als Klemmrand (14) mit dem Becher- und/oder Trichterrand zu kuppeln ist und dessen radial innerer umlaufender Randsteg als Einführöffnung (9) in die Trichteröffnung (13) hineinragt.

4. Dipgerät nach Anspruch 3, gekennzeichnet durch einen Ringspalt zwischen Trichterfläche und innerem Steg.

**Claims**

1. A dip instrument for udder hygiene in which a teat is dipped into a liquid hygiene preparation, comprising a cup (3) to be supplied with liquid hygiene preparation (15) from a reservoir (1), the reservoir (1) being integrally formed on the side of the cup (3) and having a product outlet (8) to the cup, characterized in that the cup (3) is connected to the product outlet of the reservoir (1) by a tube section (4) integrally formed on the side of the cup while the reservoir is connected to the tube section (4) by an air-tight coupling (6), in that the longitudinal axes of the tube section (4) and cup (3) are substantially perpendicular to one another, in that a funnel (5) is inserted into the cup opening in air-tight manner and comprises at least one vent (1) at substantially the centre of the funnel and at least one opening (10) in or at the base of the funnel, in that the funnel (5) and, more particularly, its opening is designed to fit over any teat, in that the uppermost part of the product outlet (8) in the working position is level with or above the vents (11) in the funnel (5).

2. A dip instrument as claimed in claim 1, characterized in that the product outlet (8) between the tube section (4) and the cup (3) comprises substantially the entire cross-section of the tube section.

3. A dip instrument as claimed in claim 1 or 2, characterized by a splash rim (12) to be fitted into the opening (13) of the funnel (5) in the form of an inverted trough, of which the radially outer, encircling web is designed to be coupled as a retaining lip (14) with the rim of the cup and/or funnel and of which the radially inner encircling web projects as an insertion opening (9) into the funnel opening (13).

4. A dip instrument as claimed in claim 3, characterized by an annular gap between the funnel wall and the inner web.

**Revendications**

1. Appareil de trempage pour les soins du pis dans lequel une tétine est plongée dans un agent de coin liquide avec un récipient qui doit être approvisionné en l'agent de soin (15) liquide provenant d'un réservoir d'alimentation (1), dans lequel le réservoir d'alimentation (1) est façonné latéralement sur le récipient (3) et possède un passage de produit (8) vers le récipient, caractérisé en ce que le récipient (3) est mis en relation par l'intermédiaire d'un support en tube (4) façonne sur lui latéralement avec l'écoulement de produit du réservoir d'alimentation (1) et celui-ci est mis en relation avec le support en tube (4) par l'intermédiaire d'un couplage (6) étanche à l'air que les axes longitudinaux du support en tube (4) et le récipient (3) sont disposés essentiellement verticalement l'un au-dessus de l'autre, qu'un entonnoir (5) est mis en place d'une manière étanche à l'air, dans l'ouverture du récipient et possède au moins une bouche d'aération (11) latérale au milieu environ de la base de l'entonnoir et au moins une ouverture (10) dans ou sur le fond de l'entonnoir, que l'entonnoir (5) est façonné dans sa forme, en particulier dans son ouverture, de sorte qu'il peut être retourné au-dessus de chaque tétine, que la zone supérieure en position de travail de la section transversale du passage de produit (8) se situe aussi haute que ou plus haute que les bouches d'aération (11) de l'entonnoir (5).

2. Appareil de trempage selon la revendication 1, caractérisé en ce que le passage de produit (8) entre le support en tube (4) et le récipient (3) entoure essentiellement la totalité de la section transversale du support en tube.

3. Appareil de trempage selon la revendication 1 ou 2, caractérisé en ce que le bord « choc » (12) qui doit être mis en place dans l'ouverture (13) de l'entonnoir (5) ayant la forme d'une auge placée sur la tête dont la traverse du bord tournant à l'extérieur radialement en tant que bord de contact (14) doit être couplée avec le bord du récipient et/ou de l'entonnoir et dont la traverse du bord tournant radialement à l'intérieur est saillante en tant qu'ouverture d'introduction (9) dans l'ouverture de l'entonnoir (13).

4. Appareil de trempage selon la revendication 3, caractérisé par une fente d'anneau entre les faces de l'entonnoir et la traverse intérieure.

FIG. 1

FIG. 2

FIG 3

FIG. 4

FIG 5